# EUROPEAN PATENT APPLICATION

(11) **EP 4 640 639 A1**
(43) Date of publication of application: **29.10.2025**
(21) Application number: 23907114.5
(22) Date of filing: 20.12.2023
(51) Int. Cl.: C02F 3/28, C02F 3/10

(54) **WASTEWATER TREATMENT APPARATUS AND WASTEWATER TREATMENT METHOD**

(30) Priority: 22.12.2022 JP 2022206086
(71) Applicant: Sumitomo Heavy Industries, Ltd., Tokyo 141-6025 (JP)
(72) Inventor: NAGATA, Keiji, Yokosuka-shi, Kanagawa 237-8555 (JP); HASHIMOTO, Yohei, Yokosuka-shi, Kanagawa 237-8555 (JP)
(74) Representative: Louis Pöhlau Lohrentz
(86) International application number: PCT/JP2023/045817
(87) International publication number: WO 2024/135754

(57) **Abstract**

An object of the present invention is to provide a wastewater treatment apparatus and a wastewater treatment method that use a treatment tank filled with a carrier, and that can suppress carrier outflow and clogging of a carrier layer and continue stable treatment.

In order to achieve the object, the present invention provides a wastewater treatment apparatus and a wastewater treatment method including a treatment tank filled with carbonaceous carriers having particle diameters of 0.7 mm to 2.0 mm in wastewater treatment for anaerobically treating wastewater.

The present invention is based on the knowledge found by the present inventors that carrier outflow may occur depending on the particle diameter in performing anaerobic treatment using the treatment tank filled with a carbonaceous carrier. According to the present invention, the carrier can be prevented from floating due to the biogas generated in the anaerobic treatment, and the carrier outflow can be suppressed. In addition, since accumulation of a solid content between the carriers is suppressed, it is also possible to suppress the clogging of the carrier layer. Accordingly, it is possible to continue a stable treatment.

## Description

### Technical Field

The present invention relates to a wastewater treatment apparatus and a wastewater treatment method. In particular, the present invention relates to a wastewater treatment apparatus and a wastewater treatment method that perform anaerobic treatment using a treatment tank filled with a carrier.

### Background Art

Generally, a biological treatment using various microorganisms is known as a method for treating wastewater containing an organic substance. In particular, the biological treatment (hereinafter, referred to as "anaerobic treatment") in an anaerobic environment has a high merit in terms of introduction, such as not requiring aeration power and hardly generating excess sludge.

As such an anaerobic treatment, an upflow anaerobic sludge bed process (UASB) using a treatment tank filled with sludge or granules is known. In addition, using a treatment tank filled with a carrier is also known in order to further increase an anaerobic microorganism concentration in the treatment tank.

In addition, as the carrier used at this time, a resin carrier is widely known in terms of mechanical intensity and durability.

For example, PTL 1 describes that ultra-high molecular weight polyethylene satisfying a specific range of intrinsic viscosity is used as a carrier for immobilized microorganisms for an anaerobic fluidized bed. In addition, PTL 1 describes that the carrier made of the ultra-high molecular weight polyethylene is excellent in intensity, heat resistance, and abrasion resistance, and is usable as a carrier excellent in long-term durability and long-term flow stability.

### Citation List

### Patent Literature

[PTL 1] Japanese Unexamined Patent Publication No. 2015-202431

### Summary of Invention

### Technical Problem

As one of the anaerobic treatments, a methane fermentation treatment is known. The methane fermentation treatment is an anaerobic treatment in which organic substances in wastewater are decomposed into methane and carbon dioxide by the action of anaerobic microorganisms in an anaerobic environment, and is widely used as an anaerobic treatment from the viewpoint of treatment cost and the usefulness of the generated gas.

Here, when a carrier for increasing the microbial concentration is used in the anaerobic treatment, in a case where the resin carrier as described in PTL 1 is used, the carrier is likely to float due to the generated gas in a case of the gas generation such as the methane fermentation treatment, and is likely to flow out of the tank (system). Therefore, there is a problem in that it is difficult to increase an anaerobic microorganism concentration in the tank as a result. Hereinafter, the outflow of the carrier to the outside of the tank (system) is also simply referred to as "carrier outflow".

In addition, in the description of PTL 1, the carrier having excellent intensity and abrasion resistance can be used as the carrier having excellent long-term flow stability. However, in a case where a treatment tank filled with a carrier is used, the solid content contained in water, which is to be treated, introduced into the treatment tank and the anaerobic microorganisms that increase with the passage of time accumulate on the carrier due to the continuation of the treatment. As a result, there is a problem in that a gap between the carriers is reduced, the carrier layer is clogged, and the treatment performance is significantly deteriorated. In addition, there is a problem in that the bulk of the carrier layer increases, which leads to an increase in the likelihood of the carrier outflow. Therefore, it is required to maintain long-term flow stability by carrier characteristics other than intensity and abrasion resistance or by treatment conditions.

An object of the present invention is to provide a wastewater treatment apparatus and a wastewater treatment method that use a treatment tank filled with a carrier, and that can suppress carrier outflow and clogging of a carrier layer and continue stable treatment.

### Solution to Problem

The present inventor has made intensive studies to achieve the above object, and as a result, in a wastewater treatment apparatus and a wastewater treatment method using a treatment tank filled with a carrier, it has been found that the use of the carbonaceous carrier having a particle diameter in a specific range makes it possible to suppress carrier outflow and clogging of a carrier layer, and to continue stable treatment. In this way, the present invention has been completed.

That is, the present invention is a wastewater treatment apparatus and a wastewater treatment method described below.

In order to achieve the objects, a wastewater treatment apparatus of the present invention is a wastewater treatment apparatus for performing anaerobic treatment on wastewater, including: a treatment tank filled with a carbonaceous carrier having a particle diameter of 0.7 mm to 2.0 mm.

The present inventor has found that the carrier outflow may occur depending on the particle diameter in performing the anaerobic treatment using the treatment tank filled with the carbonaceous carrier.

The wastewater treatment apparatus of the present invention is based on this knowledge, and according to this feature, the carrier can be prevented from floating due to the biogas generated with the anaerobic treatment, and the carrier outflow can be suppressed. In addition, the carbonaceous carrier tends to have a specific gravity larger than that of the solid content contained in the wastewater. Accordingly, when the wastewater passes through the carrier layer as the water to be treated, the solid content also easily passes through the carrier layer at the same time. Therefore, the accumulation of the solid content between the carriers is suppressed, and thus, it is also possible to suppress the clogging of the carrier layer. Accordingly, it is possible to continue a stable treatment.

In addition, as one embodiment of the wastewater treatment apparatus of the present invention, a flow rate in the treatment tank is controlled to be 1.0 to 2.0 times a minimum fluidization velocity of the carbonaceous carrier.

In a case of using a carrier having a relatively large particle diameter, such as the carbonaceous carrier used in the present invention, there is a high possibility of the carrier outflow. Therefore, it is particularly effective to appropriately control the flow rate in the treatment tank.

According to this feature, the carrier layer can be maintained in a state of flowing at a flow rate at which the carbonaceous carrier does not flow out of the tank. Accordingly, it is easy to form a gap between the carriers, and thus a substance (solid content in the wastewater or a part of the propagated anaerobic microorganisms) that causes clogging of the carrier layer is more likely to pass through the carrier layer. That is, the carbonaceous carrier can be maintained in the tank, and the substance that causes the clogging of the carrier layer can be efficiently discharged to the outside of the tank (system), and thus the carrier outflow and the clogging of the carrier layer can be further suppressed, and stable treatment can be continuously performed.

In addition, as one embodiment of the wastewater treatment apparatus of the present invention, the wastewater treatment apparatus includes an internal circulation unit that recovers treatment water that has passed through the treatment tank and returns the recovered treatment water to the treatment tank to circulate the treatment water.

In general, in a wastewater treatment apparatus using the treatment tank filled with the carrier, by controlling a flow rate (a supplied water amount) of wastewater supplied from the outside of the treatment tank to the inside of the treatment tank, the flow rate in the treatment tank related to fluidity of the carrier layer in the treatment tank is controlled. In addition, in this case, a transfer mechanism (pump or the like) including a drive unit is generally used to supply (transfer) the wastewater from the outside of the treatment tank to the inside of the treatment tank. In this case, a force (energy) required for driving the transfer mechanism depends on a pressure difference (a hydraulic pressure difference between an upstream side and a downstream side of the transfer mechanism) applied to the transfer mechanism. That is, in a case where the supply of the wastewater is performed to the treatment tank in which a certain amount of water (wastewater) is stored from the outside of the treatment tank by using the transfer mechanism, the flow rate required in the treatment tank increases, and accordingly, power (drive energy of the transfer mechanism) for supplying the wastewater from the outside of the treatment tank to the inside of the treatment tank also increases.

Meanwhile, according to this feature, when the wastewater (water to be treated) introduced into the treatment tank passes through the carrier layer and is discharged to the outside of the system as the treatment water, the treatment water is recovered and returned to the treatment tank again to be circulated. Accordingly, since the upstream side and the downstream side of the transfer mechanism are the same tank (treatment tank), the pressure difference acting on the transfer mechanism that transfers (circulates) the wastewater can be reduced. That is, even when the flow rate (flow rate required to fluidize the carrier layer) required in the treatment tank increases, it is possible to suppress an increase in the power (drive energy of the transfer mechanism) required for transferring the wastewater and reduce the running cost.

In order to achieve the objects, a wastewater treatment method of the present invention is a wastewater treatment method for performing anaerobic treatment on wastewater, the method including: using a treatment tank filled with a carbonaceous carrier having a particle diameter of 0.7 mm to 2.0 mm.

The wastewater treatment method of the present invention is based on the knowledge relating to the above-described relationship between the carrier outflow and the carrier particle diameter, and according to this feature, the carrier can be prevented from floating due to the biogas generated with the anaerobic treatment, and the carrier outflow can be suppressed. In addition, the carbonaceous carrier tends to have a specific gravity larger than that of the solid content contained in the wastewater. Accordingly, when the wastewater passes through the carrier layer as the water to be treated, the solid content also easily passes through the carrier layer at the same time. Therefore, the accumulation of the solid content between the carriers is suppressed, and thus, it is also possible to suppress the clogging of the carrier layer. Accordingly, it is possible to continue a stable treatment.

In addition, as one embodiment of the wastewater treatment method of the present invention, the method includes a flow rate control process of controlling a flow rate in the treatment tank to be 1.0 to 2.0 times a minimum fluidization velocity of the carbonaceous carrier.

In a case of using a carrier having a relatively large particle diameter, such as the carbonaceous carrier used in the present invention, there is a high possibility of the carrier outflow. Therefore, it is particularly effective to appropriately control the flow rate in the treatment tank.

According to this feature, the carrier layer can be maintained in a state of flowing at a flow rate at which the carbonaceous carrier does not flow out of the tank. Accordingly, it is easy to form a gap between the carriers, and thus a substance (solid content in the wastewater or a part of the propagated anaerobic microorganisms) that causes clogging of the carrier layer is more likely to pass through the carrier layer. That is, the carbonaceous carrier can be maintained in the tank, and the substance that causes the clogging of the carrier layer can be efficiently discharged to the outside of the tank (system), and thus the carrier outflow and the clogging of the carrier layer can be further suppressed, and stable treatment can be continuously performed.

### Advantageous Effects of Invention

According to the present invention, in the wastewater treatment apparatus and the wastewater treatment method using the treatment tank filled with the carrier, it is possible to provide the wastewater treatment apparatus and the wastewater treatment method capable of suppressing the carrier outflow and the clogging of the carrier layer and continuously performing stable treatment.

### Brief Description of Drawings

Fig. 1 is a schematic explanatory diagram of a wastewater treatment apparatus according to a first embodiment of the present invention.
Fig. 2 is a graph showing a particle diameter boundary of a carbonaceous carrier flowing out of a treatment tank filled with the carbonaceous carrier in an anaerobic treatment using the treatment tank.
Figs. 3A to 3D are schematic explanatory diagrams showing another aspect of the wastewater treatment apparatus according to the first embodiment of the present invention.
Figs. 4A and 4B are schematic explanatory diagrams showing another aspect of the wastewater treatment apparatus according to the first embodiment of the present invention.
Figs. 5A and 5B are schematic explanatory diagrams showing another aspect of the wastewater treatment apparatus according to the first embodiment of the present invention.
Fig. 6 is a schematic explanatory diagram of a wastewater treatment apparatus according to a second embodiment of the present invention.
Figs. 7A and 7B are schematic explanatory diagrams showing another aspect of the wastewater treatment apparatus according to a second embodiment of the present invention.

### Description of Embodiments

A wastewater treatment apparatus and a wastewater treatment method of the present invention are suitably used in anaerobic treatment of wastewater containing an organic substance.

Examples of the wastewater containing the organic substance, which is a treatment target of the present invention, include industrial wastewater and domestic wastewater such as sewage discharged from various factories such as a food factory, a chemical factory, and a paper pulp factory. The wastewater containing the organic substance is not limited thereto, and the wastewater containing the organic substance that can be biologically treated under anaerobic conditions is the treatment target of the present invention. Examples of such a wastewater include organic wastewater containing livestock excrement and urine and sludge (excess sludge).

Hereinafter, embodiments of a wastewater treatment apparatus and a wastewater treatment method according to the present invention will be described in detail with reference to the drawings. The wastewater treatment method in the present invention is replaced with the description of the operation of the wastewater treatment apparatus according to the present invention.

The wastewater treatment apparatus and the wastewater treatment method described in the embodiment are merely examples for describing the wastewater treatment apparatus and the wastewater treatment method according to the present invention, and are not limited thereto.

### [First Embodiment]

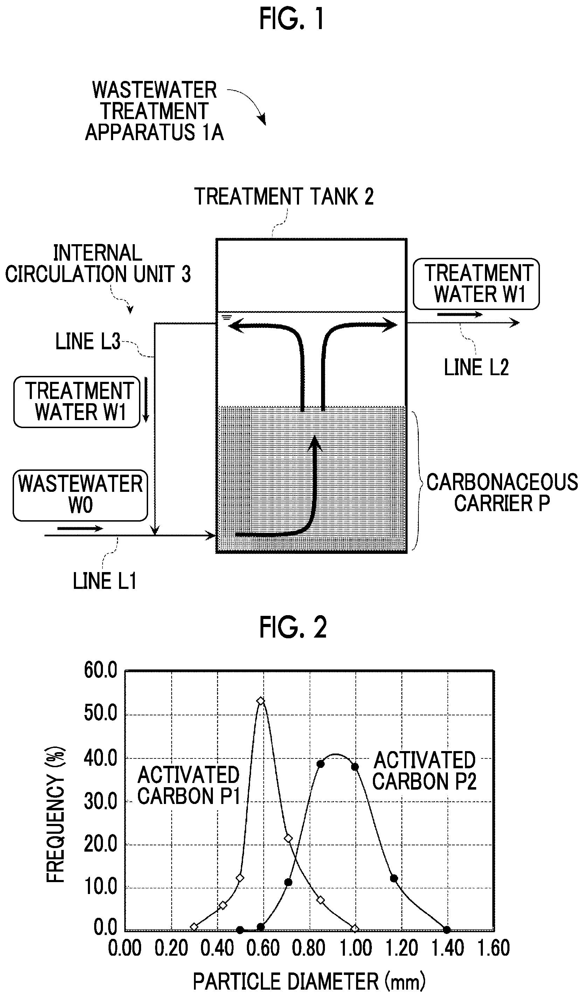

Fig. 1 is a schematic explanatory diagram of a wastewater treatment apparatus according to a first embodiment of the present invention.

As shown in Fig. 1, a wastewater treatment apparatus 1A in the present embodiment includes a treatment tank 2 which is filled with a carbonaceous carrier P inside and in which anaerobic treatment is performed by introducing a wastewater WO**.** In addition, the treatment tank 2 has a line L1 which is an introduction pipe for introducing the wastewater WO into the treatment tank 2 and a line L2 which is a discharge pipe for discharging a treatment water W1 discharged from the treatment tank 2 to the outside of the system. Further, as an internal circulation unit 3 that recovers the treatment water W1 and returns the treatment water W1 to the treatment tank 2 to circulate the treatment water W1, the treatment tank 2 is provided with a line L3 through which a part of the treatment water W1 discharged from the treatment tank 2 is introduced and which is connected to the line L1 to form a circulation path for the treatment water W1 with respect to the treatment tank **2.** Arrows in Fig. 1 indicate the flow of water.

The treatment tank 2 is a reaction tank for anaerobically treating the wastewater WO**.** As shown in Fig. 1, the wastewater WO is supplied to the treatment tank 2 via the line L1 provided in a lower portion of the treatment tank 2. In the treatment tank 2, the anaerobic microorganisms existing inside the treatment tank 2 decompose the components contained in the wastewater WO**.** The treatment water W1 after the anaerobic treatment is discharged from the treatment tank 2 via the line L2 provided at the upper portion of the treatment tank 2. In addition, a part of the treatment water W1 is recovered by the internal circulation unit 3 to be described later and is introduced into the treatment tank 2 again. The treatment tank 2 is preferably a closed system, and it is preferable to maintain an anaerobic environment.

The treatment tank 2 is filled with the carbonaceous carrier P, and the anaerobic microorganisms can be held in the treatment tank 2. Accordingly, it is possible to increase an anaerobic microorganism concentration in the treatment tank 2 and improve the anaerobic treatment efficiency.

The line L1 for introducing the wastewater WO into the treatment tank 2 may be connected to a distributor (dispersion pipe, dispersion plate, or the like) provided at the bottom portion of the treatment tank 2, and may be used to introduce the wastewater WO into the treatment tank 2. Accordingly, it is easy to control the flow rate of the wastewater WO introduced into the treatment tank 2.

The pump may be provided in the line L1 so that the wastewater WO forms a stable upward flow in the treatment tank 2 (not shown).

As the anaerobic microorganism in the present embodiment, any microorganism that can perform anaerobic treatment of an organic substance may be used, and the specific type of the microorganism is not particularly limited. For example, in a case where the anaerobic treatment is performed by the methane fermentation treatment, the acid-producing bacteria and the methane-producing bacteria are used as the anaerobic microorganisms. Other anaerobic microorganisms include denitrifying bacteria used for denitrification treatment that reduces nitric acid and nitrous acid, and sulfatereducing bacteria used for sulfate reduction treatment that reduces sulfuric acid.

The anaerobic microorganism of the present embodiment may use an isolated microorganism, or may use seed sludge from other wastewater treatment facilities or the like. In addition, the present invention may be used to utilize anaerobic microorganisms contained in the wastewater WO**.**

The carbonaceous carrier P of the present embodiment refers to a carrier made of an inorganic material having carbon as a main component, and specifically, examples thereof include carbon black, graphite, coke, activated carbon, and the like. In addition, the carbonaceous carrier P of the present embodiment is not particularly limited in terms of the presence or absence of pores. However, from the viewpoint that the carbonaceous carrier P can adsorb a component that inhibits anaerobic treatment by the anaerobic microorganisms in addition to holding the anaerobic microorganisms, it is preferable that the carbonaceous carrier P has pores, and it is preferable to use activated carbon.

In addition, the carbonaceous carrier P of the present embodiment has a particle diameter in a specific range.

The present inventor has obtained a knowledge that when the anaerobic treatment is performed by a treatment tank filled with a carbonaceous carrier, the outflow to the outside of the tank (system) occurs depending on the particle diameter of the carbonaceous carrier.

Here, the relationship between the outflow of the carbonaceous carrier from the outside of the tank (system) of the tank and the particle diameter of the carbonaceous carrier will be described based on the example.

First, two types of activated carbon (activated carbon P1 and activated carbon P2) having different particle diameters were used as the carbonaceous carrier, and the inside of the treatment tank having an effective volume of 1.8 liters was filled with the activated carbon. Then, the wastewater containing the organic substance was introduced into the treatment tank, and anaerobic treatment (methane fermentation) was performed. Then, in the treatment tank, a phenomenon in which the bubbles of the generated biogas adhere to the activated carbon occurred. Then, in the treatment tank filled with the activated carbon P1, the activated carbon floated in the treatment tank and flowed out of the tank (system). Meanwhile, in the treatment tank filled with the activated carbon P2, the activated carbon remained in the treatment tank as it was.

At this time, the particle diameter of the activated carbon (activated carbon P1) flowing out of the tank and the particle diameter of the activated carbon (activated carbon P2) remaining in the tank were measured.

The particle diameter measurement was performed based on JISZ8815:1994 "Test sieving method general rules", and the sieve opening (mm) of 0.30, 0.425, 0.50, 0.60, 0.71, 0.85, 1.00, 1.18, and 1.40 were used.

The filling density of the activated carbon (measured value based on JISK1474) in the present example was 0.43 to 0.53 g/mL for the activated carbon P1 and 0.47 to 0.55 g/mL for the activated carbon P2.

The result is shown in Fig. 2.

Fig. 2 is a graph showing the results of the particle diameter measurement of the activated carbon (activated carbon P1) that has flowed out of the tank and the activated carbon (activated carbon P2) that has remained in the tank in the above-described example.

The graph in Fig. 2 shows a frequency (%) of the carbonaceous carrier on a vertical axis and shows the particle diameter (mm) of the carbonaceous carrier on a horizontal axis.

Here, since there is almost no difference in the filling density of the activated carbon P1 and the activated carbon P2, the graph related to the activated carbon P1 in Fig. 2 shows the particle diameter distribution of the carbonaceous carrier in which the carrier outflow occurs due to the anaerobic treatment of the biogas generated when the treatment tank is filled, and the graph related to the activated carbon P2 shows the particle diameter distribution of the carbonaceous carrier in which the carrier outflow does not occur.

That is, the graph in Fig. 2 shows the particle diameter boundary of the carbonaceous carrier flowing out of the treatment tank filled with the carbonaceous carrier in the anaerobic treatment using the treatment tank.

From Fig. 2, it can be seen that the lower limit of the particle diameter of the carbonaceous carrier is set to 0.7 mm or more, and the carbonaceous carrier of 90% or more is maintained in the treatment tank without the carrier outflow.

In addition, when the particle diameter of the carbonaceous carrier is increased, the carrier outflow is suppressed, but the flow rate required to fluidize the carrier layer is also increased, and the running cost for satisfying this flow rate is also increased. Therefore, the upper limit of the particle diameter of the carbonaceous carrier is 2.0 mm or less.

The carbonaceous carrier P in the present embodiment tends to have a specific gravity higher than that of the solid content (mainly organic substances) contained in the wastewater WO**.** Accordingly, when the wastewater WO passes through the carrier layer in the treatment tank 2 as the water to be treated, the solid content also passes through the carrier layer at the same time. That is, the accumulation of the solid content in the wastewater between the carbonaceous carriers P is suppressed. Accordingly, the decrease in the function of the carbonaceous carrier P and the clogging of the carrier layer are suppressed.

In addition, when the wastewater is continuously supplied to the clogged carrier layer, the bulk of the carrier layer increases, and thus the carrier outflow is likely to occur. Meanwhile, by using the carbonaceous carrier P of the present embodiment, the clogging of the carrier layer is suppressed. Therefore, it is possible to suppress the carrier outflow due to an increase in the bulk of the carrier layer.

Therefore, in the wastewater treatment apparatus 1A of the present embodiment, it is possible to suppress the carrier outflow and the clogging of the carrier layer and continue stable treatment by setting the particle diameter of the carbonaceous carrier P filling the treatment tank 2 to a specific range.

As described above, the factor that the carbonaceous carrier P in the treatment tank 2 flows out of the tank (system) has a large influence of the floating due to the adhesion of the biogas. Therefore, not only the specific gravity (density) of the carbonaceous carrier P but also the particle diameter of the carbonaceous carrier P related to the area (surface area of the carbonaceous carrier P) to which the biogas can be adhered has a large influence on the carrier outflow. In addition, the flow rate in the treatment tank 2 has less influence on the carrier outflow compared to the floating due to the adhesion of the biogas.

Meanwhile, the clogging of the carrier layer is caused by the accumulation of a substance (solid content in the wastewater or a part of the propagated anaerobic microorganisms) which causes the clogging of the carrier layer with respect to the carbonaceous carrier P. Therefore, the wastewater treatment apparatus 1A of the present embodiment preferably includes a means for efficiently separating the substance that causes the clogging of the carrier layer from the carbonaceous carrier P in addition to the separation by the difference in specific gravity between the carbonaceous carrier P and the substance that is the clogging factor of the carrier layer.

In a case of using the carrier having a relatively large particle diameter, such as the carbonaceous carrier P used in the present embodiment, the possibility of the carrier outflow is high. Therefore, it is particularly effective to appropriately control the flow rate in the treatment tank 2.

Therefore, as an example of the wastewater treatment apparatus 1A of the present embodiment including a means for efficiently separating a substance that causes the clogging of the carrier layer from the carbonaceous carrier P, there is a case where the particle diameter of the carbonaceous carrier P filling the treatment tank 2 is set to a specific range, a case where the flow rate in the treatment tank 2 is controlled to be a predetermined multiple of the minimum fluidization velocity of the carbonaceous carrier P, or the like.

Here, the minimum fluidization velocity (Umf) is a value that depends on the particle diameter, the particle shape, and the specific gravity (density) of the particles (carbonaceous carrier P) to be targeted, and can be calculated based on the relationship between the flow rate and the pressure loss.

Specifically, a pressure sensor is provided in the treatment tank 2, and a relationship between the flow rate of the fluid flowing in the treatment tank 2 and the pressure (pressure loss) is obtained. The pressure loss derived based on the measurement result of the pressure sensor increases with an increase in the flow rate, but becomes constant from a certain point in time. Then, the flow rate at which the pressure loss starts to become constant is different for each particle, and this flow rate is the minimum fluidization velocity Umf for each particle.

In this case, it is preferable that the installation position of the pressure sensor provided in the treatment tank 2 is the bottom of the tank. Accordingly, it is possible to detect a pressure change of the entire treatment tank 2. In addition, it is preferable to install a plurality of pressure sensors in an up-down direction of the tank in the treatment tank 2. In the treatment tank 2 filled with the carrier, the static hydraulic pressure of the water (wastewater WO) stored increases with respect to the pressure loss caused by the particles (carbonaceous carrier P). For this reason, a plurality of pressure sensors are provided, and a differential pressure thereof is used, so that it is possible to more accurately derive the pressure loss.

In addition, the minimum fluidization velocity can be calculated by a known experimental equation or calculation equation based on various experiments in addition to the calculation based on the above-described relationship between the flow rate and the pressure loss. For example, the Wen-Yu equation or the like can be used in addition to the Ergun equation and the modified equation thereof.

More specifically, the flow rate in the treatment tank 2 is controlled to be 1.0 to 2.0 times the minimum fluidization velocity of the carbonaceous carrier P to be filled. By setting the flow rate in the treatment tank 2 to 1.0 times or more, more preferably 1.1 times or more of the minimum fluidization velocity of the carbonaceous carrier P to be filled, it is possible to reliably form and maintain the flowing state of the carrier layer. Meanwhile, when the flow rate in the treatment tank 2 is increased, the flowing state of the carrier layer is maintained, but the carrier may flow out. In addition, the drive energy of the transfer mechanism (pump or the like) accompanying the flow rate control is also increased. Therefore, the flow rate in the treatment tank 2 is set to 2.0 times or less, more preferably 1.5 times or less, the minimum fluidization velocity of the filling carbonaceous carrier P to reduce running costs related to maintaining the flowing state of the carrier layer while suppressing the discharge of the carbonaceous carrier P to the outside of the tank. That is, the flow rate in the treatment tank 2 is controlled to be within a predetermined multiple of the minimum fluidization velocity of the filling carbonaceous carrier P, whereby the state where the carrier layer is fluidized at a flow rate at which the carbonaceous carrier P does not flow out of the tank can be appropriately maintained.

In this case, since it is easy to form the gap between the carbonaceous carriers P, a substance that causes the clogging of the carrier layer is partially captured by the carbonaceous carriers P, but most of the substance passes through the carrier layer. That is, while the carbonaceous carrier P is maintained in the treatment tank 2, a substance that causes the clogging of the carrier layer can be efficiently discharged to the outside of the tank (system), and the carrier outflow and the clogging of the carrier layer can be further suppressed, and stable treatment can be continuously performed.

In this case, as a means for controlling the flow rate in the treatment tank 2 in the wastewater treatment apparatus 1A of the present embodiment, any means may be used as long as the flow rate in the treatment tank 2 can be controlled to satisfy a predetermined value based on the minimum fluidization velocity of the carbonaceous carrier P described above.

In addition, as the treatment in the treatment tank 2 is continued, the specific gravity of the carbonaceous carrier P may change due to the adhesion of the microorganism to the carbonaceous carrier P, and the fluidity and the minimum fluidization velocity of the carbonaceous carrier P may change. Therefore, in controlling the flow rate in the treatment tank **2,** it is preferable to provide a pressure sensor in the treatment tank 2 and continuously or periodically derive the pressure loss to detect the fluctuation of the minimum fluidization velocity. Accordingly, it is possible to perform the flow rate control according to the state (minimum fluidization velocity) of the carbonaceous carrier P in the treatment tank 2, and it is possible to further stabilize the treatment.

Here, in the conventional wastewater treatment apparatus using the treatment tank filled with the carrier, generally, the flow rate inside the treatment tank, which is related to the fluidity of the carrier layer inside the treatment tank, is controlled by controlling the flow rate (supplied water amount) of the wastewater supplied from the outside of the treatment tank to the inside of the treatment tank. In addition, in order to supply (transfer) the wastewater from the outside of the treatment tank 2 to the inside of the treatment tank 2, a transfer mechanism (pump or the like) including a drive unit is also used. In this case, a force (energy) required for driving the transfer mechanism depends on a pressure difference (a hydraulic pressure difference between an upstream side and a downstream side of the transfer mechanism) applied to the transfer mechanism. That is, in a case where the wastewater WO is supplied to the treatment tank 2 in which a certain amount of water (wastewater WO) is stored from the outside of the treatment tank 2 by using the transfer mechanism, the flow rate required in the treatment tank 2 increases, and accordingly, the power (drive energy of the transfer mechanism) for supplying the wastewater WO from the outside of the treatment tank 2 to the inside of the treatment tank 2 also increases. In particular, in a case where the carrier having a relatively large particle diameter is used as the carbonaceous carrier P used in the present embodiment, the absolute value of the flow rate (minimum fluidization velocity) required to fluidize the carrier layer tends to increase, which leads to an increase in the running cost of the wastewater treatment apparatus 1.

Therefore, in the wastewater treatment apparatus 1A of the present embodiment, for example, as shown in Fig. 1, the internal circulation unit 3 that recovers the treatment water W1 that has passed through the treatment tank 2 and returns the recovered treatment water W1 to the treatment tank 2 to circulate the treatment water W1 is provided. In this manner, the flow rate in the treatment tank 2 is controlled. More specifically, when the wastewater WO introduced into the treatment tank 2 passes through the carrier layer and is discharged to the outside of the tank (system) as the treatment water W1, a part of the treatment water W1 is recovered, and the recovered treatment water W1 is returned to the treatment tank 2 again and circulated. In this manner, since the upstream side and the downstream side of the transfer mechanism are the same tank (treatment tank 2), a pressure difference acting on the transfer mechanism that transfers (circulates) the treatment water W1 can be reduced. That is, even when the flow rate required in the treatment tank 2 increases, it is possible to suppress an increase in the power (drive energy of the transfer mechanism) required for transferring the treatment water W1 and reduce the running cost.

The specific structure and means of the internal circulation unit 3 are not particularly limited.

As an example of the internal circulation unit 3, for example, as shown in Fig. 1, a line L3 for recovering and transferring the wastewater WO (treatment water W1) that has passed through the carrier layer from the upper portion of the treatment tank 2 may be provided, and the line L3 may be connected to the line L1 to form a circulation path, thereby internally circulating the treatment water W1 with respect to the treatment tank **2.** In addition, in order to efficiently transfer the treatment water W1 in the circulation path and to facilitate the flow rate control, it is preferable to provide a transfer mechanism (pump or the like) including a drive unit on the line 3 (not shown). In this case, a member (screen or the like) for suppressing the carrier outflow may be provided at the connection point (water intake point) between the line L3 and the treatment tank 2.

In addition, as another aspect of the internal circulation unit 3, for example, a draft tube is provided in the treatment tank 2, and the flow direction of the treatment water W1 is reversed inside and outside the draft tube, thereby enabling the internal circulation of the treatment water W1 inside the treatment tank 2.

Further, as another aspect of the internal circulation unit 3, in the recovery of the treatment water W1, an overflow component recovery mechanism that recovers the treatment water W1 exceeding a predetermined water level in the treatment tank 2 is provided, and the treatment water W1 recovered by the overflow component recovery mechanism is internally circulated via the line L3. By using the overflow portion from the inside of the treatment tank 2 as the treatment water W1 to be recovered and circulated, it is possible to easily perform the internal circulation of the treatment water W1 with respect to the treatment tank 2 while maintaining the total water amount in the treatment tank 2.

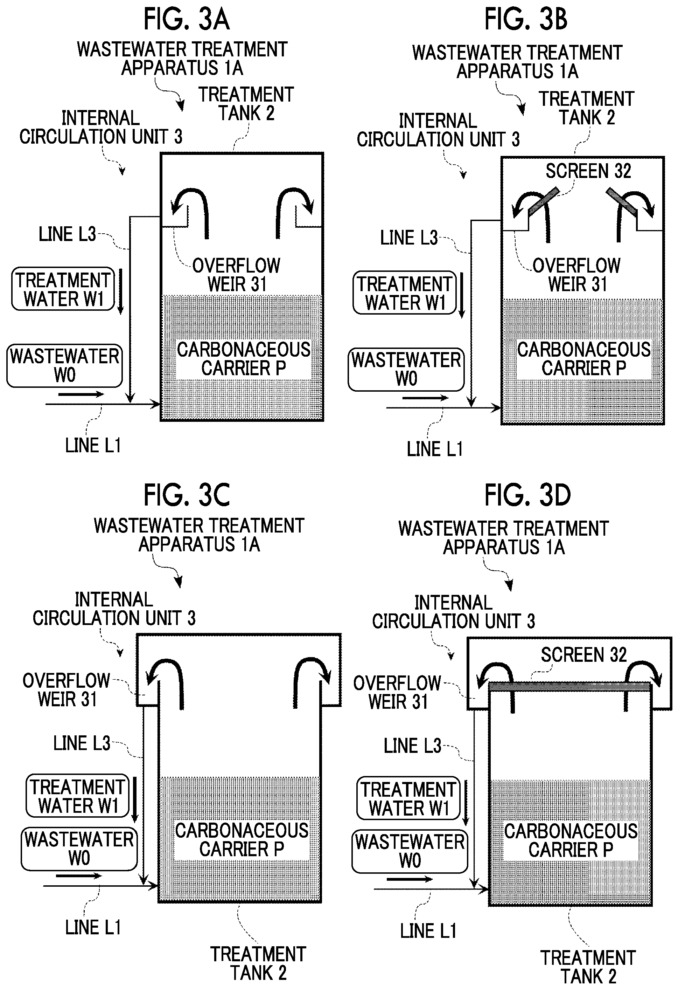

Hereinafter, as an example related to the internal circulation unit 3 in the wastewater treatment apparatus 1A, an example in which an overflow component recovery mechanism is provided will be described with reference to Figs. 3A to 3D.

Figs. 3A to 3D are schematic explanatory diagrams showing another aspect of the wastewater treatment apparatus 1A of the present embodiment.

As shown in Figs. 3A to 3D, as the wastewater treatment apparatus 1A in the present embodiment, there is provided a device in which an overflow weir 31 is provided as the overflow component recovery mechanism in the internal circulation unit 3. In addition, in Figs. 3A to 3D, the line L2 for discharging the treatment water W1 to the outside of the system is not shown.

The overflow weir 31 may be provided at the upper portion of the treatment tank 2, and may allow the treatment water W1 that has overflowed from a predetermined position of the treatment tank 2 to be recovered. In addition, the structure of the overflow weir 31 is not particularly limited, and as shown in Figs. 3A and 3B, the overflow weir 31 may be provided along the inner periphery of the treatment tank 2, or as shown in Figs. 3C and 3D, the overflow weir 31 may be provided along the outer periphery of the treatment tank 2. In addition, in order to enhance the effect of suppressing the carrier outflow, as shown in Figs. 3B and 3D, a screen 32 may be provided, and the treatment water W1 may overflow to the overflow weir 31 side via the screen 32. At this time, a position for providing the screen 32 is not particularly limited, but examples thereof include providing the screen 32 immediately before the overflow weir 31 as shown in Fig. 3B, and installing the screen 32 on the entire surface of the upper portion of the treatment tank 2 as shown in Fig. 3D.

In addition, as another aspect of the overflow weir 31, a trough-shaped member may be provided at the center portion of the treatment tank 2. In this case, the screen 32 may be provided around the trough-shaped member to enhance the effect of suppressing the carrier outflow.

In a case where the overflow weir 31 is provided as the overflow component recovery mechanism, it is not necessary to provide a separation device (settler) for separating the solid, liquid, and gas contained in the treatment water W1.

In the wastewater treatment apparatus 1A of the present embodiment, the overflow component recovery mechanism is provided, and in a case where the overflow portion of the treatment water W1 is recovered and internally circulated, the treatment water W1 recovered by the overflow component recovery mechanism is mainly a liquid component. In addition, the solid or gas contained in the treatment water W1 as the overflow portion is internally circulated, and thus returns to the treatment tank 2 again. That is, it is not necessary to separate the solid, liquid, and gas.

In general, in the treatment tank provided with such a separation device, the separation efficiency by the separation device may be lowered by increasing the flow rate in the treatment tank 2, and it may be difficult to continue stable treatment. On the other hand, in the wastewater treatment apparatus 1A of the present embodiment, in a case where the overflow component recovery mechanism is provided, the separation device is not essential. Therefore, even when the flow rate in the treatment tank 2 is increased in order to maintain the flow of the carrier layer, it is possible to continue stable treatment.

In addition, as the internal circulation unit 3, a treatment water recovery mechanism for effectively recovering only the liquid component in the treatment water W1 may be provided instead of the overflow component recovery mechanism.

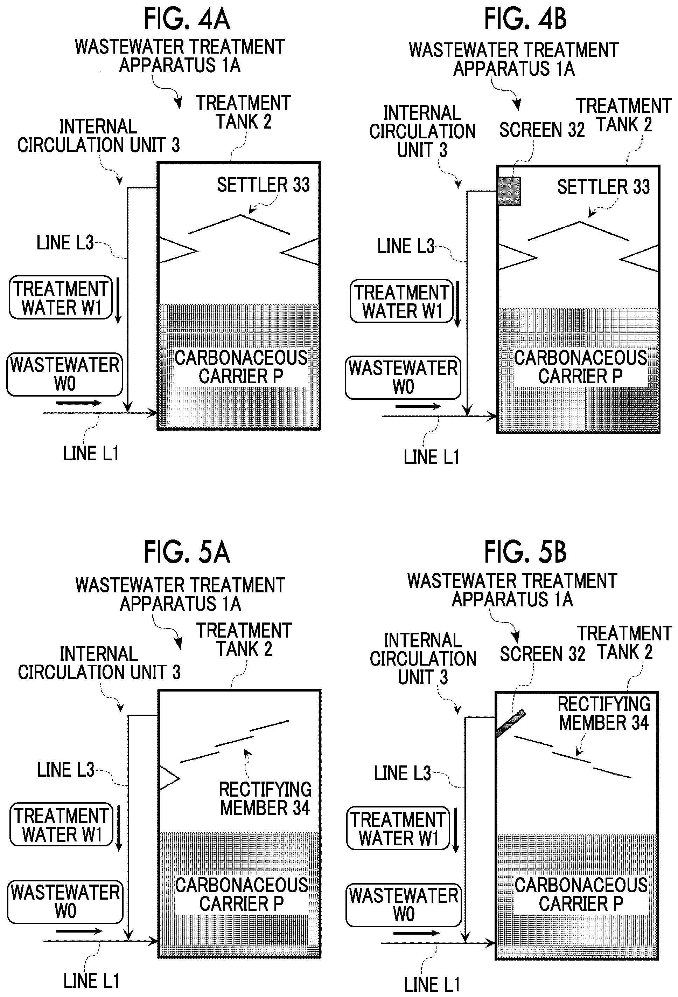

Figs. 4A to 5B are schematic explanatory diagrams showing another aspect of the wastewater treatment apparatus 1A of the present embodiment.

As the wastewater treatment apparatus 1A in the present embodiment, there is a device provided with a settler 33 shown in Figs. 4A and 4B or a device provided with a rectifying member 34 shown in Figs. 5A and 5B as the treatment water recovery mechanism in the internal circulation unit 3. In addition, in Figs. 4A to 5B, the line L2 for discharging the treatment water W1 to the outside of the system is not shown.

In a case where the settler 33 is provided as the treatment water recovery mechanism, as shown in Figs. 4A and 4B, the line L3 is connected to the upper portion of the settler 33. Accordingly, the clear treatment water W1 from which the biogas and the solid content have been separated can be recovered and introduced into the line L3 and internally circulated. In this case, since the solid content included in the treatment water W1 to be internally circulated is significantly reduced, it is possible to further suppress the clogging of the carrier layer.

In addition, as shown in Fig. 4B, the screen 32 may be provided at the connection point between the line L3 and the treatment tank 2 to enhance the effect of suppressing the carrier outflow.

The structure of the settler 33 is not particularly limited, and the settler 33 may have a structure that is not left-right symmetrical. For example, the settler 33 may be provided only in the vicinity of a connection point (water intake point) between the line L3 and the treatment tank 2. Accordingly, it is possible to reduce the number of components related to the wastewater treatment apparatus 1A.

In addition, as the treatment water recovery mechanism, as shown in Figs. 5A and 5B, the rectifying member 34 may be provided instead of the settler 33. The rectifying member 34 may be any member capable of forming the flow direction of the treatment water W1 at the upper portion of the treatment tank 2, and may be disposed in a manner that particularly takes into account the direction of movement of the biogas in the treatment water W1. For example, as shown in Fig. 5A, the rectifying member 34 may be disposed such that the biogas in the treatment water W1 moves in a direction away from the connection point (water intake point) between the line L3 and the treatment tank 2, or as shown in Fig. 5B, the rectifying member 34 may be disposed such that the biogas in the treatment water W1 can wash the screen 32 provided at the connection point (water intake point) between the line L3 and the treatment tank 2.

In addition, in the wastewater treatment apparatus 1A of the present embodiment, when the biogas in the treatment water W1 is separated by providing the treatment water recovery mechanism, the biogas may be recovered and returned to the treatment tank 2. Accordingly, it is possible to control the flow rate by the internal circulation of the biogas in addition to the flow rate control by the internal circulation of the treatment water W1. Accordingly, it is easy to control the flow rate to be a flow rate required to form the fluidized bed in the treatment tank 2 even in a case where the carbonaceous carrier P having a relatively large minimum fluidization velocity is used.

In addition, the treatment tank 2 in the present embodiment can be further provided with various additional facilities. For example, the treatment tank 2 may be provided with an internal water temperature adjusting unit, a pH adjusting agent charging unit, and a unit for adding such as nitrogen, phosphorus, metals such as cobalt and nickel, which are nutrient sources required for microorganisms. In particular, in a case where the anaerobic treatment is performed by methane fermentation by the acid-producing bacteria and the methane-producing bacteria, it is preferable that the treatment tank 2 is provided with a unit for recovering, purifying, and storing the methane gas as the facility additional to the treatment tank 2.

### [Second Embodiment]

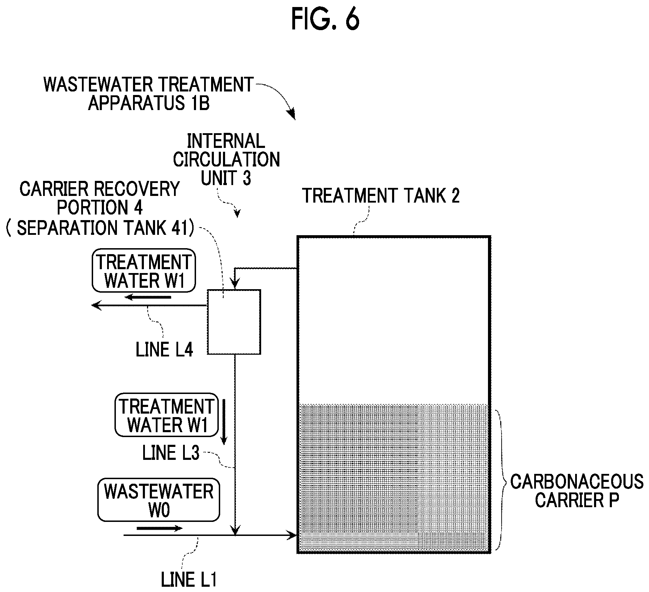

Figs. 6 to 7B are schematic explanatory diagrams of a wastewater treatment apparatus 1B according to the second embodiment of the present invention.

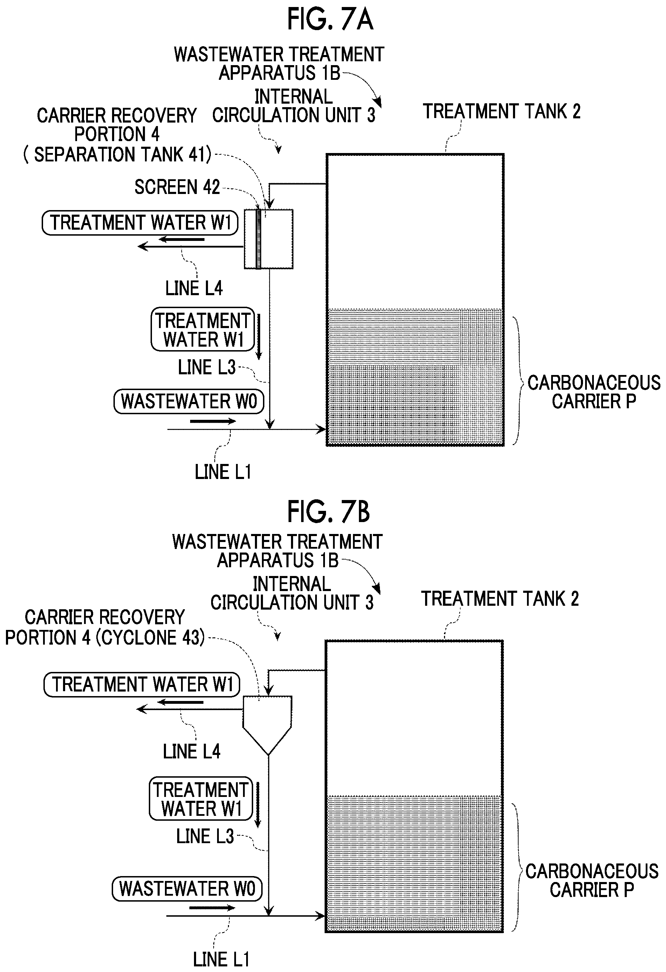

As shown in Figs. 6 to 7B, a wastewater treatment apparatus 1B according to the present embodiment includes a carrier recovery portion 4 that recovers the carbonaceous carrier P flowing out from the treatment tank 2 in the wastewater treatment apparatus 1A according to the first embodiment.

In addition, the same components as those of the wastewater treatment apparatus 1A of the first embodiment are not described among the components of the wastewater treatment apparatus 1B in the present embodiment.

The wastewater treatment apparatus 1B in the present embodiment is provided with the carrier recovery portion 4 on the circulation flow path of the internal circulation unit 3, and thus, the carbonaceous carrier P that has flowed out of the tank together with the treatment water W1 is recovered and returned to the treatment tank 2. Accordingly, the outflow of the carbonaceous carrier P can be suppressed, the anaerobic microorganism concentration in the treatment tank 2 can be maintained, a high anaerobic treatment efficiency can be obtained, and the treatment can be stably continued.

The carrier recovery portion 4 in the present embodiment may be any as long as the carrier recovery portion 4 can recover the carbonaceous carrier P flowing out from the treatment tank 2 to the internal circulation unit 3 side and can return the carbonaceous carrier P to the treatment tank 2 via the internal circulation unit 3, and is not particularly limited.

As an example of the carrier recovery portion 4, for example, as shown in Fig. 6, a separation tank 41 may be provided on the circulation path (line L3) of the internal circulation unit 3. Examples of the separation tank 41 include those in which the treatment water W1 is introduced via the line L3 and the carbonaceous carrier P contained in the treatment water W1 can be recovered by sedimentation separation. Then, the carbonaceous carrier P recovered by the separation tank 41 is returned to the treatment tank 2 together with the treatment water W1 again via the line L3. On the other hand, a part of the treatment water W1 from which the carbonaceous carrier P has been removed is discharged to the outside of the system via a line L4.

In addition, as another aspect of the carrier recovery portion 4, as shown in Fig. 7A, the separation tank 41 may be provided on the circulation path (line L3) of the internal circulation unit 3, and the screen 42 may be provided inside the separation tank 41, or as shown in Fig. 7B, a cyclone 43 may be provided on the circulation path (line L3) of the internal circulation unit 3.

In any of the carrier recovery portions 4, the treatment water W1 containing the recovered carbonaceous carrier P is returned to the treatment tank 2 via the line L3, and a part of the treatment water W1 from which the carbonaceous carrier P has been removed is discharged to the outside of the system via the line L4.

The above-described embodiment is an example of a wastewater treatment apparatus and a wastewater treatment method. The wastewater treatment apparatus and the wastewater treatment method according to the present invention are not limited to the above-described embodiments, and the wastewater treatment apparatus and the wastewater treatment method according to the above-described embodiments may be modified without changing the concept described in the claims.

For example, in the wastewater treatment apparatus and the wastewater treatment method of the present embodiment, in order to continue stable treatment, it is preferable to perform corrosion prevention (cavitation prevention) of the treatment tank. More specifically, the material of the treatment tank is concrete or resin (FRP), or the inner surface of the treatment tank is processed (lined, coated, painted, or the like).

### Industrial Applicability

The wastewater treatment apparatus and the wastewater treatment method of the present invention are used for anaerobic treatment of the wastewater containing the organic substance. In particular, the wastewater treatment apparatus and the wastewater treatment method of the present invention are suitably used for anaerobic treatment accompanied by the generation of biogas.

### Reference Signs List

1A, 1B Wastewater treatment apparatus
2 Treatment tank
3 Internal circulation unit
31 Overflow weir
32 Screen
33 Settler
34 Rectifying member
4 Carrier recovery portion
41 Separation tank
42 Screen
43 Cyclone
L1 to L4 Line
P Carbonaceous carrier
WO Wastewater
W1 Treatment water

## Claims

1. A wastewater treatment apparatus for performing anaerobic treatment on wastewater, comprising: a treatment tank filled with a carbonaceous carrier having a particle diameter of 0.7 mm to 2.0 mm.

2. The wastewater treatment apparatus according to claim 1,
wherein a flow rate in the treatment tank is controlled to be 1.0 to 2.0 times a minimum fluidization velocity of the carbonaceous carrier.

3. The wastewater treatment apparatus according to claim 1 or **2,** further comprising: an internal circulation unit that recovers treatment water that has passed through the treatment tank and returns the recovered treatment water to the treatment tank to circulate the treatment water.

4. A wastewater treatment method for performing anaerobic treatment on wastewater, the method comprising: using a treatment tank filled with a carbonaceous carrier having a particle diameter of 0.7 mm to 2.0 mm.

5. The wastewater treatment method according to claim 4,
wherein the method includes a flow rate control process of controlling a flow rate in the treatment tank to be 1.0 to 2.0 times a minimum fluidization velocity of the carbonaceous carrier.
